# EUROPÄISCHE PATENTANMELDUNG

(11) **EP 2 147 746 A2**
(43) Veröffentlichungstag der Anmeldung: **27.01.2010**
(21) Anmeldenummer: 09009584.5
(22) Anmeldetag: 23.07.2009
(51) Int. Cl.: B24B 39/04, B23B 5/12

(54) **Verfahren und Maschine zur Herstellung eines Rotors einer Exzenterschneckenpumpe**

(30) Priorität: 24.07.2008 CA 2638236
(71) Anmelder: Artemis Kautschuk- und Kunststoff-Technik GmbH, 30559 Hannover (DE)
(72) Erfinder: Jäger, Sebastian, 30657 Hannover (DE); Weinhöfer, Willi, 31061 Alfeld (DE)
(74) Vertreter: Seewald, Jürgen

(57) **Zusammenfassung**

Die vorliegende Erfindung betrifft ein Verfahren und eine Maschine zur Herstellung eines Rotors einer Exzenterschneckenpumpe, bei der bzw. bei dem die Gestalt des Rotors durch einen Schälvorgang hergestellt wird, dem sich ein Glättvorgang der Oberfläche anschließt. Aufgabe der Erfindung ist es, den Glättvorgang mit diesem Verfahren bzw. mit dieser Maschine weniger zeitaufwendig und zudem kostengünstiger zu gestalten. Gelöst wird diese Aufgabe mit einem Verfahren, bei dem der Glättvorgang durch Glattwalzen erfolgt. Die Maschine zur Durchführung des Verfahrens weist ein Maschinenbett (3) auf, auf dem zur Bearbeitung des Rotors (2) axial verfahrbar mindestens ein Glattwalzkopf (7) angeordnet ist.

## Beschreibung

Die vorliegende Erfindung betrifft ein Verfahren und eine Maschine zur Herstellung eines Rotors einer Exzenterschneckenpumpe gemäß dem Oberbegriff des Anspruchs 1 bzw. des Anspruchs 4.

Rotoren von Exzenterschneckenpumpen bestehen aus hartem Material, beispielsweise aus einsatzgehärtetem Stahl, und laufen in einem mit einem Elastomer ausgekleideten Stator. Um im Betrieb eine wirksame Abdichtung zwischen Rotor und Stator zu erreichen und den Verschleiss zu minimieren, muss die Oberfläche des Rotors glatt sein.

Üblicherweise wird ein Rotor nach einer spanenden Formgebung, die in aller Regel durch einen Schälvorgang erfolgt, mittels Bandschleifen auf Fertigmaß geschliffen und anschließend die Oberfläche feingeschliffen und gegebenenfalls noch poliert. Dieses Herstellungsverfahren ist sehr zeitaufwendig und kostenintensiv.

In der DE 299 04 463 U1 wird ein Verfahren beschrieben, bei dem der Rotor nach einer spanenden Formgebung zum Glätten seiner Oberfläche in ein Bett aus in einer Schleifemulsion angeordneten Gleitschliffkörpern eingelegt wird. Der Schleifvorgang erfolgt dann durch Bewegung des Bettes. Ein derartiger Schleifvorgang ist immer noch kosten- und zeitaufwendig.

Die DE 196 33 984 A1 beschreibt ein Verfahren, bei dem auf eine spanenden Formgebung des Rotors verzichtet wird. Um den Rotor kostengünstiger herstellen zu können, wird auf Urform- oder Umformtechniken zurückgegriffen. Dabei wird ein Rohling des Rotors durch Gießen oder Gesenkschmieden hergestellt. Da dessen Oberfläche noch sehr rau ist, muss diese feinbearbeitet werden. Das geschieht dadurch, dass der Rotor durch eine Düse gezogen bzw. durch diese hindurchgedrückt wird. Dadurch wird die Oberfläche des Rotors geglättet und gleichzeitig seine Querschnittsabmessung kalibriert. Die Glättung der Oberfläche des Rotors erfolgt hier also mit Hilfe einer Umformtechnik.

Aufgabe der vorliegenden Erfindung ist es, ein gattungsgemäßes Verfahren und eine Maschine zur Verfügung zu stellen, mit dem bzw. der der Glättvorgang weniger zeitaufwendig und zudem kostengünstig realisierbar ist.

Diese Aufgabe wird erfindungsgemäß mit einem Verfahren gelöst, welches die Merkmale des Anspruchs 1 aufweist und mit einer Maschine gemäß Anspruch 4.

Bei dem erfindungsgemäßen Verfahren erfolgt also die Finish-Bearbeitung der Oberfläche des Rotors durch Glattwalzen. Die Technologie des Glattwalzens zur Finish-Bearbeitung von Oberflächen gehört schon seit langem zum allgemeinen Stand der Technik. Trotz der damit verbundenen, hinlänglich bekannten Vorteile - geringe Rautiefe und Härtezunahme durch Kaltverfestigung - wurde diese Technologie bisher überraschenderweise nicht bei der Herstellung eines Rotors einer Exzenterschneckenpumpe eingesetzt. Durch das Glattwalzen kann gegenüber der Finish-Bearbeitung durch Schleifen Zeit eingespart werden.

Eine Maschine zur Durchführung des erfindungsgemäßen Verfahrens ist ähnlich einer Drehmaschine aufgebaut. Sie besitzt ein Maschinenbett, auf dem axial verfahrbar mindestens ein Glattwalzkopf angeordnet ist. Bei Anordnung von mehr als einem Glattwalzkopf kann beispielsweise ein mehrstufiges Glattwalzen erfolgen.

Die Wirksamkeit des Glattwalzprozesses kann erhöht werden, wenn der mindestens eine Glattwalzkopf um den Rotor rotiert, und zwar mit einer Rotationsgeschwindigkeit, die größer als die des Rotors ist.

Es ist zweckmäßig, wenn zusätzlich zu dem mindestens einen Glattwalzkopf mindestens ein Schälkopf axial verfahrbar auf dem Maschinenbett angeordnet ist, weil dann der gesamte Bearbeitung des Rotors ohne Umspannen auf einer Maschine ausgeführt werden kann.

Der mindestens eine Schälkopf und Glattwalzkopf können dabei entweder auf einem gemeinsamen oder aber auf getrennten Bettschlitten angeordnet sein.

Weitere vorteilhafte Ausgestaltungen der Erfindung ergeben sich aus den übrigen Unteransprüchen.

Die Erfindung wird nachstehend anhand von zwei Ausführungsbeispielen näher erläutert. In der dazugehörigen Zeichnung zeigt:
- Fig. 1: einen perspektivischen Blick auf eine Maschine zum Schälen und Glattwalzen eines Rotors einer Exzenterschneckenpum- pe nach einem ersten Ausführungsbeispiel,
- Fig. 2: eine Seitenansicht einer Maschine zum Schälen und Glatt- walzen eines Rotors einer Exzenterschneckenpumpe nach einem zweiten Ausführungsbeispiel,
- Fig. 3: eine Seitenansicht eines Glattwalzkopfes, und
- Fig. 4: eine Seitenansicht eines Schälkopfes.

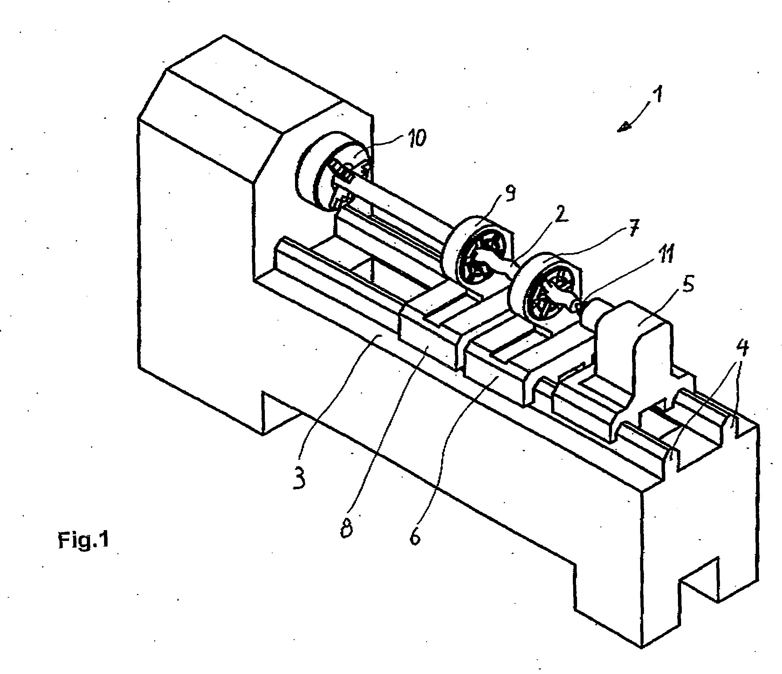

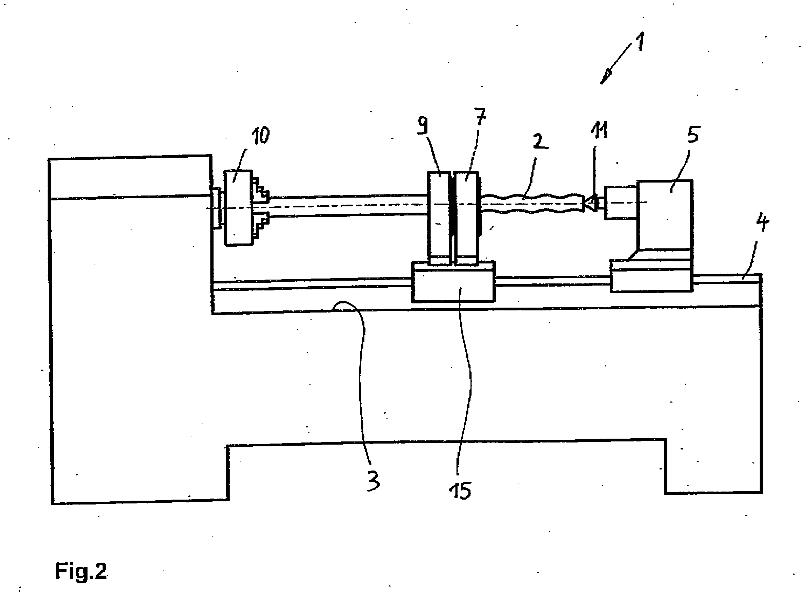

Die in der Zeichnung dargestellte Maschine 1 zur Herstellung von Rotoren 2 für Exzenterschneckenpumpen ist nach Art einer Drehmaschine aufgebaut. Sie besitzt ein Bett 3 mit zwei parallelen Führungsbahnen 4, auf dem ein Reitstock 5, ein Bettschlitten 15 (Fig. 2) bzw. zwei Bettschlitten 6 und 8 (Fig. 1) für einen Glattwalzkopf 7 sowie für einen Schälkopf 9 längs verfahrbar angeordnet sind. Der Rotor 2 bzw. sein Rohling ist an seinem einen Ende in ein Spannfutter 10 eingespannt und stützt sich an seinem anderen Ende am Reitstock 5 ab, der dazu eine Zentrierspitze 11 aufweist, die in eine stirnseitig in den Rotor 2 eingebrachte Zentrierbohrung eingreift. Anstelle des Reitstocks 5 kann auch eine Buchse zur radialen Abstützung des Rotors 2 zum Einsatz kommen. Ebenso können Lünetten eingesetzt werden.

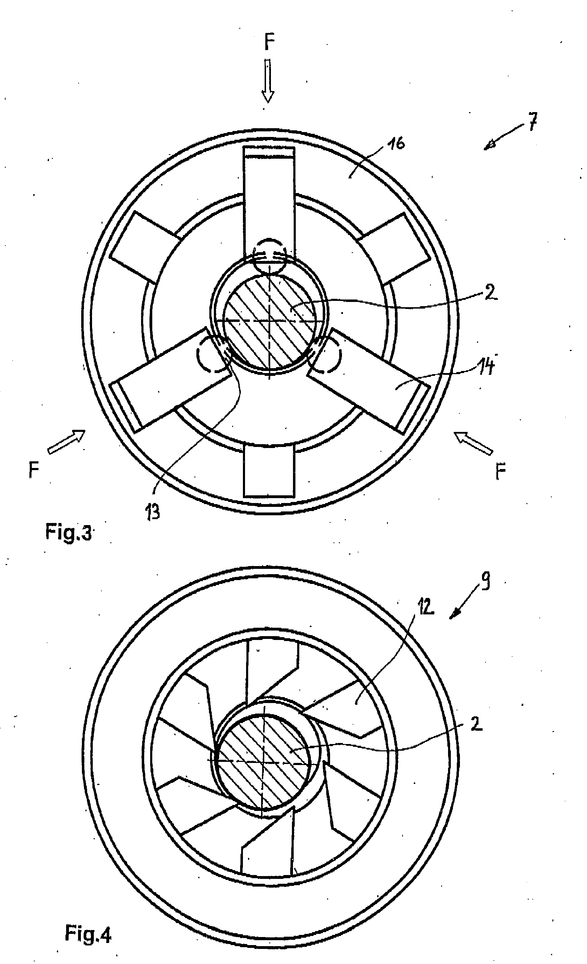

Im Glattwalzkopf 7 kommen bei den Ausführungsbeispielen drei kugelförmige Wälzkörper 13 zum Einsatz, die in einem Abstand von jeweils 120° zueinander angeordnet und in einer ringförmigen Aufnahme 16 geführt sind. Die Zustellung der Wälzkörper 13 auf den Rotor 2 erfolgt über Hydraulikzylinder 14, die für einen gleichmäßigen und ausreichenden Anpressdruck der Wälzkörper 13 auf die Oberfläche des Rotors 2 sorgen ( siehe Pfeile F in Fig. 3). Die ringförmige Aufnahme 16, und damit die Wälzkörper 13 rotieren um den Rotor 2, wobei die Rotationsgeschwindigkeit der Aufnahme 16 größer als die des Rotors 2 ist.

In den Ausführungsbeispielen der Erfindung besitzt der Schälkopf 9 sechs Schälmesser 12, die in einem Abstand von jeweils 60° zueinander angeordnet sind.

In dem in Fig. 1 gezeigten Ausführungsbeispiel sind der Schälkopf 9 und der Glattwalzkopf 7, wie oben schon ausgeführt, auf separaten Bettschlitten 8 und 6 angeordnet, wodurch sie getrennt verfahrbar sind. Zur Herstellung des Rotors 2 wird zunächst der Schälkopf 9 vom Reitstock 5 zum Spannfutter 10 hin verfahren, wodurch die genaue Kontur des Rotors 2 hergestellt wird. Anschließend wird dann der Glattwalzkopf 7 zum Spannfutter 10 hin bewegt, wodurch eine Glättung der Oberfläche des Rotors 2 erreicht wird. Nach Ablauf dieser beiden Verfahrensschritte werden der Schälkopf 9 und der Glattwalzkopf 7 wieder in ihre Ausgangsstellung verfahren.

In dem Ausführungsbeispiel gemäß Fig. 2 sind der Schälkopf 9 und der Glattwalzkopf 7 auf einem gemeinsamen Bettschlitten 15 angeordnet. Sie sind dadurch nur gemeinsam verfahrbar. Durch diese Anordnung kann die Bearbeitungszeit des Rotors 2 im Vergleich mit dem ersten Ausführungsbeispiel weiter verkürzt werden.

## Patentansprüche

1. Verfahren zur Herstellung eines Rotors einer Exzenterschneckenpumpe, bei dem die Gestalt des Rotors durch einen Schälvorgang hergestellt wird, dem sich ein Glättvorgang der Oberfläche anschließt, **dadurch gekennzeichnet, dass** der Glättvorgang durch Glattwalzen mit mindestens einem Glattwalzkopf (7) erfolgt.

2. Verfahren nach Anspruch 1, **dadurch gekennzeichnet, dass** der mindestens eine Glattwalzkopf (7) um den Rotor (2) rotiert.

3. Verfahren nach Anspruch 2, **dadurch gekennzeichnet, dass** die Rotationsgeschwindigkeit des mindestens einen Glattwalzkopfes (7) größer als die des Rotors (2) ist.

4. Maschine zur Durchführung des Verfahrens gemäß einem der vorstehenden Ansprüche mit einem Maschinenbett (3), auf dem zur Bearbeitung des Rotors (2) axial verfahrbar mindestens ein Glattwalzkopf (7) angeordnet sind.

5. Maschine nach Anspruch 4, **dadurch gekennzeichnet, dass** der mindestens eine Glattwalzkopf (7) eine ringförmige Aufnahme (16) mit radial nach innen gerichteten Wälzkörpern (13) aufweist.

6. Maschine nach Anspruch 4 oder 5, **dadurch gekennzeichnet, dass** die Wälzkörper (13) radial beweglich sind.

7. Maschine nach Anspruch 6, **dadurch gekennzeichnet, dass** die Wälzkörper (13) einzeln beweglich sind.

8. Maschine nach einem der Ansprüche 5 bis 7, **dadurch gekennzeichnet, dass** die Wälzkörper (13) eine definierte Kraft auf den Rotor (2) ausüben.

9. Maschine nach einem der Ansprüche 4 bis 8, **dadurch gekennzeichnet, dass** zur Bearbeitung des Rotors (2) zusätzlich zum mindestens einen Glattwalzkopf (7) mindestens ein Schälkopf (9) auf dem Maschinenbett (3) axial verfahrbar ist.

10. Maschine nach Anspruch 9, **dadurch gekennzeichnet, dass** der mindestens eine Schälkopf (9) und Glattwalzkopf (7) auf einem gemeinsamen Bettschlitten (15) angeordnet sind.

11. Maschine nach Anspruch 9, **dadurch gekennzeichnet, dass** der mindestens eine Schälkopf (9) und Glattwalzkopf (7) auf separaten Bettschlitten (6, 8) angeordnet sind.

12. Maschine nach einem der vorstehenden Ansprüche 4 bis 11, **dadurch gekennzeichnet, dass** die Wälzkörper (13) des mindestens einen Glattwalzkopfes (7) durch Hydraulikzylinder (14) beaufschlagt sind.
